(19) Europäisches Patentamt
European Patent Office
Office européen des brevets

(11) **EP 2 001 969 B1**

(12) **EUROPÄISCHE PATENTSCHRIFT**

(45) Veröffentlichungstag und Bekanntmachung des Hinweises auf die Patenterteilung:
**03.08.2011 Patentblatt 2011/31**

(51) Int Cl.:
*C09J 7/02* *(2006.01)*    *C09J 9/00* *(2006.01)*
*C09J 11/02* *(2006.01)*

(21) Anmeldenummer: 07727182.3

(22) Anmeldetag: **21.03.2007**

(86) Internationale Anmeldenummer:
**PCT/EP2007/052706**

(87) Internationale Veröffentlichungsnummer:
**WO 2007/107591 (27.09.2007 Gazette 2007/39)**

(54) **ELEKTROLUMINESZIERENDE HAFTKLEBEMASSEN**

ELECTROLUMINESCENT ADHESIVE MASSES

MATIÈRES AUTO-ADHÉSIVES ÉLECTROLUMINESCENTES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **23.03.2006 DE 102006013834**

(43) Veröffentlichungstag der Anmeldung:
**17.12.2008 Patentblatt 2008/51**

(73) Patentinhaber: **TESA SE**
**20253 Hamburg (DE)**

(72) Erfinder:
• **KUPSKY, Marco**
**25451 Quickborn (DE)**
• **ZÖLLNER, Stephan**
**21244 Buchholz/Nordheide (DE)**

(56) Entgegenhaltungen:
**EP-A1- 1 003 354       US-A- 2 981 858**
**US-A- 2003 011 867**

• **PROTOTECH INGREDIENTS, [Online] 7. April 2005 (2005-04-07), XP002439463 Gefunden im Internet: URL:http://www.phortech-inc.com/Eng_web%20 page.htm> [gefunden am 2007-06-27]**
• **JÜRGEN FALBE, MANFRED REGITZ: "Römpp Chemie Lexikon" 1990, GEORG THIEME VERLAG , STUTTGART NEW YORK * Seite 954, rechte Spalte - Seite 955, linke Spalte ***

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft Haftklebemassen und damit hergestellte Haftklebebänder.

Haftklebebänder sind im Zeitalter der Industrialisierung weitverbreitete Verarbeitungshilfsmittel. Insbesondere für den Einsatz für elektronische Anwendungsbereiche, insbesondere in der Computerindustrie werden an Haftklebebänder sehr hohe Anforderungen gestellt. Neben einem geringen Ausgasungsverhalten sollten die Haftklebebänder in einem weiten Temperaturbereich einsetzbar sein und bestimmte optische Eigenschaften erfüllen.

Ein Einsatzgebiet für hochentwickelte Haftklebebänder ist die Verklebung bei der Ausrüstung von elektronischen Geräten mit Flüssigkristall-Datenanzeigen (Liquid-Chrystal-Displays, LCDs), die beispielsweise für Computer, Fernsehgeräte, Laptops, PDAs, Mobiltelefone, Digitalkameras und dergleichen benötigt werden. Zur Ausrüstung von elektronischen Bauteilen mit derartigen LC-Displays werden üblicherweise elektrische oder elektronische Lichtquellen, beispielsweise LED's, mit dem LCD-Modul verklebt. Die Lichtquellen dienen dabei der Beleuchtung der Datenanzeigen von der Rückseite.

Aus der Elektronikindustrie sind auch elektrolumineszierende Bauteile bekannt. Dabei kann die Elektrolumineszenz ebenfalls zur Herstellung oder zum Einbau von ein- oder mehrfarbigen selbstleuchtenden optischen Anzeigeeinheiten ("Displays") genutzt werden. Dazu werden in der Regel elektrolumineszierende Partikel in eine Bindermatrix eingebettet, so dass eine unter elektrischer Anregung leuchtende Folie entsteht. Diese Folien können beispielsweise bedruckt werden, um als Display verwendet zu werden. Elektrolumineszierende Folien bzw. deren Komponenten zeigen EP 1 003 354 A1 sowie Phortech Ingredients (XP-002439463 Online - http://www.phortech-inc.com).

US 2 981 858 A offenbart Haftklebemassen auf Siliconbasis, die 2-10 Teile elektrolumineszenzfähgigen Phosphor enthalten.

Elektrolumineszierende Stoffe können durch elektrische Anregung (Einwirkung eines Wechselstromfeldes) zum Leuchten angeregt werden. Dabei können durch geeignete

Kombination von chemischen Materialien und Lumineszenzzentren Emissionen in nahezu allen Bereichen des sichtbaren Spektrums hervorgerufen werden.

Aufgabe der Erfindung ist es, alternative Haftklebemassen zur Verfügung zu stellen, die insbesondere zur Herstellung von Elektronikbauteilen geeignet sind. Weitere Aufgabe der Erfindung ist es, die Herstellung derartiger Elektronikbauteile zu vereinfachen.

Gelöst wird die Aufgabe überraschend durch eine Klebemasse gemäß Anspruch 1. Bevorzugte Ausgestaltungen und Weiterbildungen der erfindungsgemäßen Haftklebemasse sowie deren bevorzugte Verwendung sind Gegenstand der Unteransprüche.

Der Hauptanspruch betrifft entsprechend eine Haftklebemasse (PSA, engl.: "pressure sensitive adhesive") mit zumindest einem elektrolumineszenzfähigen Zusatz ("im Folgenden auch: "Elektrolumineszenz-Zusatz"). Als "elektrolumineszenzfähiger Zusatz" werden im Sinne der Erfindung chemische Substanzen bezeichnet, die in der Lage sind zu leuchten, wenn sie sich in einem elektrischen Feld befinden, insbesondere in einem - bevorzugt hochfrequenten - elektrischen Wechselfeld.

Die Haftklebemasse kann somit verschiedene Funktionen beispielsweise für Beleuchtungsfolien bereitstellen, nämlich den Zusammenhalt aufgrund von Klebkraft und Kohäsion, die Fähigkeit Licht zu emittieren und die Bereitstellung eines Dielektrikums zwischen zwei leitfähigen Schichten. Damit kann der Aufbau derartiger Beleuchtungsfolien gegenüber herkömmlichen Beleuchtungsfolien, die eine separate Leuchtschicht, ein separates Dielektrikum und Verbindungsmittel zur jeweiligen Verbindung der Schichten benötigen, vereinfacht werden.

Als elektrolumineszenzfähige Zusätze können insbesondere handelsübliche Elektrolumineszenzpigmente eingesetzt werden. Beispielhaft angeführt werden die Produkte mit der Bezeichnung "GlacierGLO®" der Firma OSRAM Sylvania; die in Farben wie blau, blau-grün, grün, orange und weiß erhältlich sind.

In einer bevorzugten Ausführungsform der Erfindung ist die Haftklebemasse vernetzt und zwar insbesondere chemisch oder physikalisch. Durch die Vernetzung wird zwar die Klebkraft reduziert, was insbesondere im Zusammenspiel mit der zusätzlichen Reduzierung der Klebkraft durch die Beimischung der elektrolumineszenzfähigen Zusatzstoffe unvorteilhaft ist, andererseits wird aber eine höhere Kohäsion und eine größere Wärmestabilität der Haftklebemasse erzielt, wodurch sich diese insbesondere auch für den Einsatz als dünne Schicht und bei hohen Spannungen eignet.

Die Haftklebemassen, denen die elektrolumineszenzfähigen Zusätze beigemischt werden (im folgenden auch als "Basishaftklebemass" bezeichnet), basieren - vorteilhaft in Bezug auf das spätere Anwendungsfeld - auf Polyacrylat und Silicon , insbesondere vorteilhaft mit hydrophoben und/oder unpolaren Eigenschaften. Verwiesen wird hier auf Haftklebemassen auf Polyacrylatbasis (hierbei sollen im Sinne dieser Schrift auch polymethacrylatbasierende Massen eingeschlossen sein) und Polysiloxanbasis,

Die Vernetzung der Haftklebemasse ist abhängig vom verwendeten Massesystem und kann durch die üblichen, dem Fachmann bekannten Verfahren erfolgen. Haftklebemassen auf Polyacrylatbasis können beispielsweise durch den Zusatz von thermischen Vernetzern, wie z.B. Metallchelate, Aluminium- oder Titanchelate, multifunktionelle Isocyanate, multifunktionelle Amine, multifunktionelle Alkohole oder multifunktionelle Epoxide vernetzt werden. Alternativ oder ergänzend kann die Vernetzung beispielsweise auch durch den Einsatz von UV-absorbierenden Photoinitiatoren und anschließende UV-Bestrahlung, oder durch Elektronenstrahlen erfolgen.

Silikonhaftklebemassen werden bevorzugt durch Kondensationsvernetzung, Additionsvernetzung, Platin-Katalyse oder radikalisch durch Zusatz von Peroxiden vernetzt. Auch hier kann alternativ oder ergänzend durch UV-Bestrahlung oder durch Elektronenstrahlen vernetzt werden.

Insbesondere durch die Vernetzung der Haftklebemasse ist es möglich, Haftklebemassen mit einem hohen elastischen Anteil (gemäß Mikroschertest, s. u.) zu erzielen. Als besonders geeignet hat sich dabei trotz reduzierter Klebkraft ein elastischer Anteil von mindestens 40 % gezeigt. Bevorzugt beträgt der elastische Anteil mindestens 50 %, weiter bevorzugt mindestens 60 %.

Um möglichst viele unterschiedliche Anwendungen der Haftklebemasse zu ermöglichen, ist in bevorzugter Ausgestaltung vorgesehen, dass die Haftklebemasse für sich jedenfalls im sichtbaren Bereich im Wesentlichen transparent ist. Alternativ kann vorgesehen sein, dass die Transparenz der Haftklebemasse, insbesondere sofern sie entsprechende Zusätze (Optische Aufheller, Farbpigmente) enthält, herabgesetzt ist.

Eine besonders bevorzugte Ausführungsform der Erfindung betrifft eine mit elektrolumineszenzfähigen Zusätzen versehene Haftklebemasse, die ihrerseits vorzugsweise ein Polymer aus einer Monomermischung umfasst, die in Bezug auf die Monomermischung

(a) einen überwiegenden Anteil, insbesondere 70 bis 99,9 Gew.-% eines oder mehrerer Acrylsäureester und/oder Methacrylsäure-ester mit der Formel $CH_2=CH(R_3)(COOR_4)$, wobei der Rest $R_3$ die Substituenten H und/oder $CH_3$ darstellt und der Rest $R_4$ Alkylketten mit 4 bis 14 C-Atomen darstellt; und

(b) 0,1 bis 30 Gew.-%, bevorzugt 0,5 bis 10 Gew.-% eines oder mehrerer olefinisch ungesättigter Monomere mit funktionellen Gruppen, insbesondere mit funktionellen Gruppen, die eine Vernetzung eingehen können, wie Acrylsäure, Methacrylsäure, Hydroxyethylacrylat, Glycidylacrylat, Glycidylmethacrylat oder copolymerisierbare Photoinitiatoren,

umfasst.

Zusätzlich kann die Haftklebemasse eine oder mehrere Komponenten c) umfassen, die zusammen mit den anderen Komponenten copolymerisiert werden. Die Comonomere der Komponente (c) können bis zu 40 Gew.-% der Monomermischung ausmachen.

Bevorzugt sind die Anteile der entsprechenden Komponeten a, b, und c derart gewählt, dass das Copolymer eine Glastemperatur (Tg) ≤ 15° C aufweist. Die Monomere werden bevorzugt dermaßen gewählt, dass die resultierenden Polymere bei Raumtemperatur als Haftklebemassen eingesetzt werden können, insbesondere derart, dass die resultierenden Polymere haftklebrige Eigenschaften entsprechend des "Handbook of Pressure Sensitive Adhesive Technology" von Donatas Satas (van Nostrand, New York 1989, Seite 444 - 514) besitzen. Die Glasübergangstemperatur der der Haftklebemassen zugrunde liegenden Polymere liegt vorteilhaft unterhalb 15 °C im Sinne einer dynamischen Glasübergangstemperatur für amorphe Systeme und der Schmelztemperatur für semikristalline Systeme verstanden, die durch dynamisch mechanische Analyse (DMA) bei geringen Frequenzen bestimmt werden können.

Die Steuerung der gewünschten Glasübergangstemperatur kann durch die Anwendung der Gleichung

$$\frac{1}{T_G} = \sum_n \frac{w_n}{T_{G,n}} \qquad (G1)$$

in Analogie zur Fox-Gleichung (vgl. T.G. Fox, Bull. Am. Phys. Soc. 1 (1956) 123) bei der Zusammenstellung der Monomermischung, welche der Polymerisation zugrunde liegt, erzielt werden. In der Gleichung (G1) repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Die Monomere der Komponente (a) sind insbesondere weichmachende und/oder unpolare Monomere. Ihre Zusammensetzung in der Monomermischung wird dermaßen gewählt, dass die resultierenden Polymere bei Raumtemperatur oder höheren Temperaturen als Haftklebemassen eingesetzt werden können, also derart, dass die resultierenden Polymere haftklebrige Eigenschaften besitzen.

Vorzugsweise werden für die Monomere (a) Acrylmonomere eingesetzt, die Acryl- und Methacrylsäureester mit Alkylgruppen, bestehend aus 4 bis 14 C-Atomen, bevorzugt 4 bis 9 C-Atomen, umfassen. Spezifische Beispiele, ohne sich durch diese Aufzählung einschränken zu wollen, sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmeth-acrylat, n-Nonylacrylat, Isobutylacrylat, Isooctylacrylat, Isooctylmethacrylat, und deren verzweigten Isomere, wie z. B. 2-Ethylhexylacrylat, 2-Ethylhexylmethacrylat.

Die Monomere der Komponente (b) sind insbesondere olefinische ungesättigter Monomere (b) mit funktionellen Gruppen, insbesondere mit funktionellen Gruppen, die eine Vernetzung eingehen können. Die Vernetzung kann durch Reaktion der funktionellen Gruppen mit sich selbst, anderen funktionellen Gruppen oder nach Zusatz eines geeigenten Vernetzungsagents erfolgen.

Bevorzugt werden für die Monomere (b) Monomere mit folgenden funktionellen Gruppen eingesetzt: Hydroxy-, Carboxy-, Epoxy-, Säureamid-, Isocyanato- oder Aminogruppen. Insbesondere bevorzugt sind Monomere mit Carbonsäure, Sulfonsäure-, oder Phosphonsäuregruppen.

Besonders bevorzugte Beispiele für die Komponente (b) sind Acrylsäure, Methacrylsäure, Itaconsäure, Maliensäure, Fumarsäure, Crotonsäure, Aconitsäure, Dimethylacrylsäure, β-Acryloyloxypropionsäure, Trichloracrylsäure, Vinylessigsäure" Vinylphosphonsäure, Hydroxyethylacrylat, Hydroxypropylacrylat, Hydroxyethylmethacrylat, Hydroxypropylmethacrylat, Allylalkohol, Glycidylacrylat, Glycidylmethacrylat, 6-Hydroxyhexylmethacrylat, N-Methylolmethacrylamid, N-(Buthoxymethyl)methacrylamid, N-Methylolacrylamid, N-(Ethoxymethyl)acrylamid, wobei diese Aufzählung nicht abschließend ist.

Bevorzugte Monomere (b) können auch funktionelle Gruppen enthalten, die eine nachfolgende strahlenchemische Vernetzung (z: B. Elektronenstrahlen, UV) oder über Peroxide unterstützen. Geeignete copolymerisierbare Photoinitiatoren sind beispielsweise Benzoinacrylat und acrylatfunktionalisierte Benzophenonderivate. Monomere, die eine Vernetzung durch Elektronenbestrahlung oder Peroxide unterstützen sind, z.B. Tetrahydrofufurylacrylat, N-tert. Butylacrylamid, Allylacrylat wobei diese Aufzählung nicht abschließend ist.

Prinzipiell können im Sinne der Komponente (c) alle vinylisch-funktionalisierten Verbindungen eingesetzt werden, die mit der Komponente (a) und/oder der Komponente (b) copolymerisierbar sind, und können auch zur Einstellung der Eigenschaften der resultierenden Haftklebemasse dienen.

Bevorzugte Monomere (c) sind, wobei diese Aufzählung nicht abschließend ist, z.B. Methylacrylat, Ethylacrylat, Propylacrylat, Methylmethacrylat, Ethylmethacrylat, Benzylacrylat, Benzylmethacrylat, tert.-Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Isodecylacrylat, Laurylacrylat, n-Undecylacrylat, Stearylacrylat, , Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat 2-Naphthylmethacrylat, Tetrahydrofufurylacrylat, Diethylaminoethylacrylat, Diethylaminoethylmethacrylat, Dimethylaminoethylacrylat, Dimethylaminoethylmethacrylat, Dimethylaminopropylacrylamid, Dimethylaminopropylmethacrylamid, N-(1-Methylundecyl)-acrylamid, N-(Buthoxymethyl)methacrylamid, N-(Ethoxy-methyl)acrylamid, N-(n-Octadecyl)acrylamid, weiterhin N,N-Dialkylsubstituierte Amide, wie beispielsweise N,N-Dimethylacrylamid, N,N-Dimethylmethylmethacrylamid, N-Benzyl-acrylamide, N-Isopropylacrylamid, N-tert.-Butylacrylamid, N-tert-Octylacrylamid, 2-Butoxyethylacrylat, 2-Butoxyethylmethacrylat, 3-Methoxyacrylsäuremethylester, 3-Methoxybutylacrylat, Phenoxy-ethylacrlylat, Phenoxyethylmethacrylat, 2-Phenoxyethylmethacrylat, Butyldiglykolmethacrylat, Ethylenglycolacrylat, Ethylenglycolmonomethylacrylate, Methoxy Polyethylenglykol-methacrylat 350, Methoxy Polyethylenglykolmethacrylat 500, Propyleneglycolmono-methacrylat, Butoxydiethylenglykolmethacrylat, Ethoxytriethylenglykolmethacrylat, Octa-fluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat.

Acrylnitril, Methacrylnitril, Vinylmethylether, Ethylvinylether, Vinylisobutylether, Vinylacetat, Vinylchlorid, Vinylhalogenide, Vinylidenchlorid, Vinylidenhalogenide, Vinylpyridin, 4-Vinylpyridin, N-Vinylphthalimid, Styrol, a- und p-Methylstyrol, a-Butylstyrol, 4-n-Butylstyrol, 4-n-Decylstyrol, 3,4-Dimethoxystyrol, N-Vinyllactam, N-Vinylpyrrolidon,

Die Vernetzung findet erst nach dem Beschichten statt, da ein vernetztes Polymer nicht mehr oder nur eingeschränkt fliessfähig ist. Dazu kann das Vernetzungsagens entweder vor der Beschichtung zugesetzt werden oder die Vernetzung kann nachträglich erzielt werden. Bekannte Vernetzungsverfahren sind die Zugabe von Radikalstartern, insbesondere Dibenzoylperoxid, Cumolhydroperoxid, Cyclohexanonperoxid, Di-t-butylperoxid, Cyclohexylsulfonylacetylperoxid, Diisopropyl-percarbonat, t-Butylperoktoat, oder Benzpinacol direkt vor dem Verstreichen. Diese erzeugen statistisch Radikale in den Hauptketten der Polymere, die zum Teil unter Rekombination Vernetzungspunkte bilden. Sofern reaktive Gruppen wie Acrylsäure- oder Hydroxyfunktionen vorhanden sind kann mit mehrfunktionellen Isocyanaten vernetzt werden, zum Beispiel 4,4'-Diphenylmethanduesocyanat (MDI), Hexamethylenduesocyanat (HDI), Toluolduesocyanat (TDI) oder Isophoronduesocyanat (IPDI). Auch mehrfunktionelle Epoxidvernetzer sind geeignete Vernetzungsreagenzien. Beispiele geeigneter multifunktioneller Epoxide sind 1,4-Butandioldiglycidether, Polyglycerol-3-Glycidether, Cyclohexan-dimethanoldiglycidether, Glycerintriglycidether, Neopentylglykol-diglycidether, Pentaerythrittetraglycidether, 1,6-Hexandioldiglycidether), Polypropylen-glykoldiglycidether, Trimethylolpropantriglycidether, Bisphenol-A-Diglycidether und Bisphenol-F-Diglycidether.

Ebenfalls möglich ist die Vernetzung mit Glycidylmethycrylat als Comonomer des Acrylsäureesterpolymerisats, einer eingebauten Epoxidfunktion, die sich mit Hydroxyfunktionen oder Acrylsäure unter Netzwerkbildung umsetzt. Die Vernetzung über Epoxide kann durch Anwesenheit eines Katalysators, z.B. Lewis-Säuren wie Zinkchlorid beschleunigt werden.

Sehr verbreitet ist die Vernetzung mit Metallchelaten, zum Beispiel Aluminiumacetylacetonat oder Alkoholaten wie Titanalkoholaten (zum Beispiel Titantetrabutanolat). Diese setzen stets Acrylsäure als Comonomer voraus, die mit den mehrwertigen Metallionen Carboxylate bildet.

Werden der elektrolumineszierenden Haftklebemasse UV-absorbierende Photoinitiatoren vor der Beschichtung zugesetzt oder sind copolymerisierbare Photoinitiatoren einpolymerisiert, dann kann auch durch Bestrahlung mit UV-Licht vernetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon, 2,2-Dimethoxy-2-phenyl-1-phenylethanon, Dimethoxyhydroxy-acetophenon, substituierte α-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim. Eine Vernetzungsmethode, die ohne Vernetzungschemikalien auskommt, ist die Behandlung mit Elektronenstrahlen, die ähnlich den Radikalbildnern statistisch Radikale entlang der Polymerhauptketten erzeugt, die unter Netzwerkbildung zum Teil rekombinieren. Verbessert werden kann die Wirksamkeit der Vernetzung durch UV-Licht und Elektronenbestrahlung durch Zugabe von Promotoren, in der Regel mehrfunktionelle Acrylate. Die genannten Vernetzungsmechanismen können auch kombiniert werden.

Der Vernetzeranteil bzw. die Dosis - im Falle von UV- oder Elektronenstrahlvernetzung - wird derart gewählt, dass ein elastischer Anteil der vernetzten Haftklebemassen von mindestens 40 % resuliert. Bevorzugt beträgt der elastische Anteil mindestens 50 %, weiter bevorzugt mindestens 60 %. Um einen derartigen elastischen Anteil zu erreichen beträgt der Vernetzeranteil vorzugsweise 0,1 Gew.-% bis 3 Gew.-%, weiter vorzugsweise 02, Gew.-% bis 2 Gew.-%, ganz bevorzugt 0,3 Gew.-% bis 1 Gew.-%.

Man kann den durch das erfindungsgemäße Verfahren erhältlichen Polyacrylaten vor der thermischen Vernetzung zumindest ein klebrigmachendes Harz beimischen. Als zuzusetzende klebrigmachende Harze sind die vorbekannten und in der Literatur beschriebenen Klebharze einsetzbar. Bevorzugt lassen sich Pinen-, Inden- und Kolophoniumharze einsetzen, deren disproportionierte, hydrierte, polymerisierte, veresterte Derivate und Salze, die aliphatischen und aromatischen Kohlenwasserstoffharze, Terpenharze und Terpenphenolharze sowie C5-, C9- und andere Kohlenwasserstoffharze. Auch Kombinationen dieser und weiterer Harze können vorteilhaft eingesetzt werden, um die Eigenschaften der resultierenden Klebmasse wunschgemäß einzustellen. Im Allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.

In einer besonders bevorzugten Vorgehensweise werden Terpenphenolharze und/oder Kolophoniumester hinzugesetzt.

Den Haftklebemassen können optional Weichmacher (Plastifizierungsmittel, wie beispielsweise Phosphate, Phthalate, Citrate), weitere Füllstoffe (wie z. B. organische und/oder anorganische Nanopartikel, Fasern, Zinkoxid, Kreide, Voll- oder Hohlglaskugeln, Mikrokugeln aus anderen Materialien, Kieselsäure, Silikate, organische nachwachsende Rohstoffe wie z.B. Holzmehl, Keimbildner, thermisch leitfähige Materialien (wie z.B. Bornitrid, Aluminiumoxid, Siliciumcarbid), Blähmittel, Compoundierungsmittel und/oder Alterungsschutzmittel (z.B. in Form von primären und sekundären Antioxidantien) und/oder Lichtschutzmittel zugesetzt sein.

Die Herstellung der Haftklebemassen kann nach den dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert. Vorzugsweise werden die neuen Copolymerisate durch Polymerisation der Monomeren in Lösungsmitteln, insbesondere in Lösungsmitteln eines Siedebereichs von 50 bis 150 °C, vorzugsweise von 60 bis 120 °C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt. Prinzipiell eignen sich alle für Acrylate dem Fachmann geläufigen, üblichen Initiatoren. Beispiele für Radikalquellen sind Peroxide, Hydroperoxide und Azoverbindungen, z.B. Dibenzoylperoxid, Cumolhydroperoxid, Cyclohexanonperoxid, Di-t-butylperoxid, Cyclohexylsulfonylacetylperoxid, Diisopropyl-percarbonat, t-Butylperoktoat, Benzpinacol. In einer sehr bevorzugten Vorgehensweise wird als radikalischer Initiator 2,2'-azobis(2-methylbutyronitril) (Vazo 67™ der Fa. DuPont) oder Azodiisobutyronitril (AIBN) verwendet. Als Lösungsmittel kommen insbesondere Alkohole, wie Methanol, Ethanol, n-und iso-Propanol, n-und iso-Butanol, vorzugeweise Isopropanol und/oder Isobutanol; sowie Kohlenwasserstoffe wie Toluol und insbesondere Benzine eines Siedebereichs von 60 bis 120 °C in Frage. Ferner können Ketone, wie Aceton, Methylethylketon, Methylisobutylketon und Ester, wie Essigsäureethylester sowie Gemische von Lösungsmitteln der genannten Art eingesetzt werden, wobei Gemische, die Isopropanol und/oder Isobutanol in Mengen von 3 bis 10 Gew.%, bezogen auf das eingesetzte Lösungsgemisch, enthalten, vorgezogen werden.

Die mittleren Molekulargewichte $M_w$ der bei der mit den elektrolumineszenzfähigen Zusätzen additivierten Polyacrylathaftklebemassen liegen sehr bevorzugt in einem Bereich von 20.000 bis 2.000.000 g/mol; für die weitere Verwendung als Schmelzhaftkleber bevorzugt in einem Bereich von 100.000 bis 500.000 g/mol [Die Angaben des mittleren Molekulargewichtes $M_w$ und der Polydisperistät PD in dieser Schrift beziehen sich auf die Bestimmung per Gelpermeationschromatographie. Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5µ (5 µm), $10^3$ Å (100 nm), ID 8,0 mm x 50 mm verwendet. Zur Auftrennung werden die Säulen des Typs PSS-SDV, 5 µ (5 µm), $10^3$ Å (100 nm) sowie $10^5$ Å (10.000 nm) und $10^6$ Å (100.000 nm) mit jeweils ID 8.0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung)].

Für die erfindungsgemäße Weiterverarbeitung besonders geeignet sind auch Polyacrylate, die eine enge Molekulargewichtsverteilung (Polydispersität < 4) haben. Diese Massen werden bei relativ niedrigem Molekulargewicht nach dem Vernetzen besonders scherfest. Eng verteilte Polyacrylate können durch anionische Polymerisation oder durch kontrollierte radikalische Polymerisationsmethoden hergestellt werden, wobei letzteres besonders gut geeignet ist. Beispiele sind in US 6,765,078 B2 und DE 10036901 A1 bzw. US 2004/0092685 A1 beschrieben. Auch die Atom Transfer Radical Polymerization (ATRP) lässt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

In einer weiteren sehr vorteilhaften Ausführungsform der Erfindung ist die Basishaftklebemasse eine solche auf Silikonbasis, und zwar insbesondere eine Haftklebemasse, die chemisch oder physikalisch vernetzt ist. Insbesondere durch eine radikalische Vernetzung kann die zeitabhängige Alterung der Silikonhaftklebemasse, widergespiegelt durch steigende Kohäsion sowie verminderte Adhäsion, signifikant reduziert werden. Eine radikalische Vernetzung kann dabei vorteilhaft chemisch durch den Einsatz von BPO-Derivaten (Benzoylperoxid-Derivaten) und/oder durch den Einsatz von Elektronenstrahlen durchgeführt werden.

Sehr vorteilhaft weist die Silikonhaftklebemasse eine hohe Haftung auf unpolaren Substraten und Silikonkautschuken und/oder -schäumen sowie auf silikonisierten und/oder silikonhaltigen Untergründen auf. Besonders bevorzugt wird die Vernetzung der Silikonhaftklebeschicht mittels Elektronenbestrahlung bewirkt (Elektronenstrahlhärtung, ESH). Insbesondere die Vernetzung mittels ESH führt in nicht erwarteter Weise zu zwei unmittelbar miteinander verbundenen Vorteilen. Die durch die ESH erzeugten Radikale führen einerseits zu einer Vernetzung der Silikonhaftklebemasse und zum anderen zur Bildung eines festen Verbundes der Haftklebemasse mit dem entsprechenden (unpolaren) Untergrund, auf dem sie verklebt wird, beispielsweise einer PET-Folie. Eine mögliche Migration von weich machenden Reagenzien im Klebeverbund und damit eine Veränderung der Eigenschaften wird somit deutlich erschwert, womit die Haftklebemasse ihre Temperaturstabilität beibehält.

Als Silikonhaftklebemassen können erfindungsgemäß vorteilhaft kondensationsvernetzende Systeme umfassend Silikatharze und Polydimethyl- oder Polydiphenylsiloxane zum Einsatz kommen, weiterhin ebenfalls vorteilhaft additionsvernetzende Systeme umfassend Silikatharze, Polydimethyl- oder Polydiphenylsiloxane und Crosslinker (Vernetzersubstanzen, insbesondere funktionalisierte Hydrosilane).

Einige kommerziell erhältliche Beispiele für erfindungsgemäß hervorragend einsetzbare Silikonhaftklebemassen sind, ohne durch die Aufzählung den Gegenstand der Erfindung beschränken zu wollen:

Kondensationsvernetzende Systeme:

DC 280, DC 282, Q2-7735, DC 7358, Q2-7406 von Dow Corning, PSA 750, PSA 518, PSA 910 von GE Bayer Silikones, KRT 001, KRT 002, KRT 003 von ShinEtsu, PSA 45559 von Wacker Silikones sowie PSA 400 von Rhodia;

additionsvernetzende Systeme:

DC 7657, DC 2013 von Dow Corning, PSA 6574 von GE Bayer Silikones sowie KR 3700, KR 3701 von ShinEtsu.

Die Elektrolumineszenz-Zusätze können bereits im Lösemittelprozess, vorzugsweise unter Einsatz möglichst wasserfreier Lösemittel, in die zu polymerisierende Eduktmischung oder in die noch in Lösung befindliche Haftklebemasse eingegeben werden. Die derart erhaltene mit den Elektrolumineszenz-Zusätzen modifizierte Haftklebemasse kann dann direkt aus der Lösung auf ein temporäres oder verbleibendes (permanentes) Trägermaterial aufgetragen werden. Anschließend werden die Lösemittel durch Trocknung entfernt. Bevorzugt erfolgt die Trocknung bei 60 - 160°C, sehr bevorzugt bei 80 - 120°C. Bei thermischer Vernetzung wird neben der Entfernung der Lösemittel auch die Vernetzungsreaktion durchgeführt.

Die Elektrolumineszenz-Zusätze können in alternativer Vorgehensweise auch im Heißschmelzprozess ("Hotmeltprozess") homogen in die Haftklebemasse in der Schmelze eingearbeitet werden. Dazu werden bevorzugt die Lösemittel in einem Aufkonzentrationsextruder entfernt und im lösemittelfreien oder lösungsmittelarmen Zustand Elektrolumineszenzpigmente zucompoundiert. Anschließend kann die Haftklebemasse zur Herstellung von Haftklebebändern dann aus der Schmelze auf einen temporären oder verbleibenden Träger beschichtet werden, bevorzugt mittels Walzenoder Extrusionsverfahren. Es wird beispielsweise bei 140 °C mittels eines Beschichtungsextruders beschichtet, vorteilhaft wird die Masse danach durch Elektronenbestrahlung oder UV-Bestrahlung vernetzt.

Die Menge an vorteilhaft beigemischten elektrolumineszenzfähigen Zusätzen wird nach oben durch die klebtechnischen Anforderungen der Haftklebemasse beschränkt, also dadurch, dass die Haftklebemasse auf Grund des hohen Füllgrades nicht mehr klebt. Es hat sich herausgestellt, dass Proben mit Füllgraden bis über 50 Gew.-%, bezogen auf die mit den Zusätzen versehene Haftklebemasse, immer noch hervorragende haftklebrige Eigenschaften aufweisen. Die Menge an elektrolumineszenzfähigen Zusätzen wird daher vorteilhaft mit bis zu 60 Gew.-%, bezogen auf die mit den Zusätzen versehene Haftklebemasse, gewählt, sehr vorteilhaft mit bis zu 50 Gew.-%, ganz besonders vorteilhaft mit bis zu 40 Gew.-%.

Es hat sich gezeigt, dass der Anteil der elektrolumineszenzfähigen Zusatzstoffe in der Haftklebemasse bezogen auf die mit den Zusatzstoffen versehene Haftklebemasse, mindestens 25 Gew.-%, vorzugsweise mindestens 37,5 Gew.-%, weiter vorzugsweise mindestens 50 Gew.-%, betragen sollte, um eine möglichst hohe Leuchtkraft erzielen zu können. Unerwarteter Weise kann trotz eines derart hohen Anteils der elektrolumineszenzfähigen Zusatzstoffe noch eine ausreichende Klebkraft beibehalten werden.

Insbesondere für eine hohe Langzeitstabilität der Haftklebemasse und damit verbunden eine geringe Schwankung der Leuchtintensität über die Zeit, ist ein Schutz der elektrolumineszenzfähigen Zusatzstoffe vor Feuchtigkeit notwendig. In bevorzugter Ausgestaltung ist der elektrolumineszenzfähige Zusatzstoff daher gekapselt, d.h. er weist eine äußere Schutzhülle zum Schutz vor Feuchtigkeit auf. In bevorzugter Ausgestaltung beträgt die maximale Abweichung der Beleuchtungsstärke bei längerer Lagerung, d.h. bei einer Lagerung von mindestens 3 Wochen, nicht mehr als $\pm$ 20 %, vorzugsweise nicht mehr als $\pm$ 10 %, weiter vorzugsweise nicht mehr als $\pm$ 5 %.

Die erreichbaren Beleuchtungsstärken sind abhängig vom verwendeten Pigment, der angelegten Spannung und der Frequenz (die Wahl der Frequenz ändert zusätzlich das Lichtspektrum / die "Farbtemperatur") sowie weiterhin von der Art der Haftklebemasse. In bevorzugter Ausgestaltung ist vorgesehen, dass die minimale Beleuchtungstärke bei einer Spannung von 200 V und einer Frequenz von 700 Hz mindestens 15 lx, vorzugsweise mindestens 30 lx, weiter vorzugsweise mindestens 70 lx, beträgt.

Es kann weiterhin von Vorteil sein, der Haftklebemasse außerdem optische Aufheller beizumischen. Vorteilhaft werden die Aufheller mit einem Füllgrad von bis zu 5 Gew.-% zu der Haftklebemasse zugesetzt. Durch den Einsatz optischer Aufheller lässt sich das optische Erscheinungsbild verbessern (gleichmäßigeres Leuchtbild). In günstiger Vorgehensweise kann hierdurch die für eine bestimmte Beleuchtungsstärke notwendige Menge an elektrolumineszenzfähigen Zusätzen durch Substitution mit oftmals kostengünstigeren Additiven verringert werden. Als optische Aufheller können insbesondere Stilben-, Ethylen-, Coumarin-, Naphtalimid- oder Pyrazolderivate verwendet werden. Diese können der Haftklebemasse in reiner Form oder als Mischung verschiedener optischer Aufheller zugesetzt werden.

Als "optische Aufheller" werden Stoffe bzw. Stoffgemische bezeichnet, die im UV-Bereich Licht absorbieren und im sichtbaren Bereich, vorzugsweise im Bereich von etwa 400 nm bis etwa 500 nm, eine Fluoreszenzemission haben. Diese Emission überdeckt eine in dem Bereich auftretende Absorption, so dass insgesamt in dem Bereich mehr Licht reflektiert wird (normale Reflexion + Fluoreszenzlicht). Die Materialien mit derartigen optischen Aufhellern erscheinen heller.

Alternativ oder zusätzlich zu den optischen Aufhellern können der Haftklebemasse auch Farbpigmente beigemischt werden. Die Farbpigmente absorbieren Licht bestimmter Wellenlänge und können somit als Filter für entsprechende Wellenlängen eingesetzt werden. Zudem können die Farbpigmente als Streuzentren für Licht dienen und somit zu einem gleichmäßigeren Leuchtbild beitragen. Der Füllgrad der Farbpigmente beträgt vorzugsweise bis zu 5 Gew.-%. Auch die Farbpigmente dienen der Verbesserung des optischen Erscheinungsbilds (gleichmäßigeres Leuchtbild). Als Farbpigmente können insbesondere Azopigmente, Mineralfarbpigmente oder Teefarbpigmente sowie Mischungen von verschiedener Farbpigmenten verwendet werden. Geeignete Farbpigmente sind insbesondere Zinkoxid, Titandioxid, Siliziumdioxid und/oder Zirkoniumdioxid.

Gegenstand der Erfindung sind weiterhin Klebebänder, welche mit der erfindungsgemäßen Haftklebemasse ausgerüstet sind. Als Klebebänder im erfindungsgemäßen Sinne sollen dabei alle ein- oder beidseitig mit Klebmasse beschichteten flächigen Trägergebilde und auch trägerlose flächige Klebemassenschichten verstanden werden, also neben klassischen Bändern (lange, im Verhältnis dazu schmale Flächengebilde) auch Etiketten, Abschnitte, Stanzlinge, zweidimensional ausgedehnte Gebilde und dergleichen.

Im einfachsten Falle sind zweiseitig klebende Klebebänder (Klebemassenfilme oder -schichten) realisierbar, welche lediglich aus einer einzelnen Schicht der erfindungsgemäßen Haftklebemasse aufgebaut sind (ohne Permanentträger) und vorteilhaft - zwecks besserer Handhabung - zeitweise auf einen temporären Träger aufgelegt sein können. Trägerlose Haftklebeschichten aus der erfinderischen Haftklebemasse können auch durch mehrere, aufeinander laminierte Schichten der erfinderischen Haftklebemasse oder der erfinderischen Haftklebemasse und einer oder mehreren weiteren Haftklebemassen realisiert werden.

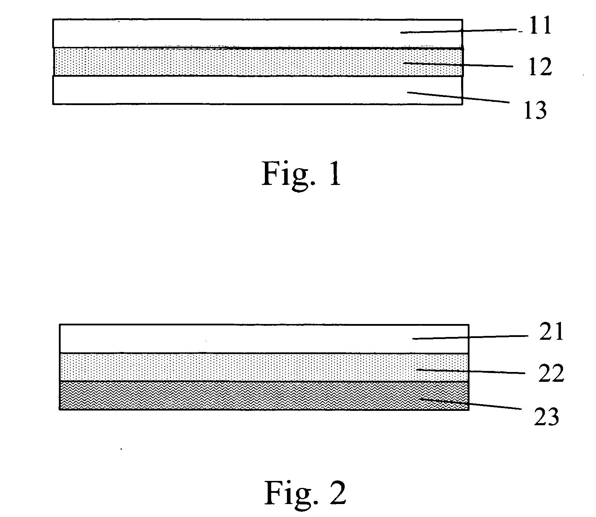

Diese - insbesondere einschichtigen - Klebemassenschichten werden vorteilhaft zwischen zwei elektrisch leitfähige, optisch durchgängige Substrate gebracht, die zur Kontaktierung der elektrolumineszenzfähigen Haftklebemasse dienen. Als derartige elektrisch leitfähige, optisch durchgängige Substrate eignen sich beispielsweise ITO-Folien (ITO = Indiumzinnoxid). Man erhält ein beidseitig leuchtendes System [siehe Figur 1;11 = elektrisch leitfähiges, optisch durchgängiges System; 12 = elektrolumineszierende Haftklebemasse, 13 = elektrisch leitfähiges, optisch durchgängiges System). Beispielhaft für kommerziell erhältliche ITO-Folien sollen hier die ITO-Folien der Firma CPFilms Ltd angeführt werden, insbesondere diejenige mit der Produktbezeichnung OC50.

In einer zweiten, vorteilhaften Ausführungsform ist die elektrolumineszenzfähige Haftklebemasse auf einer Seite mit einem elektrisch leitfähigen, optisch durchgängigen Substrat (insbesondere gewählt aus den bereits vorstehend genannten) versehen, während auf der anderen Seite ein elektrisch leitfähiges, insbesondere optisch reflektierendes Substrat vorliegt. Auf diese Weise lassen sich leuchtkraftverstärkte einseitig leuchtende Produktaufbauten verwirklichen (siehe Figur 2: 21 = elektrisch leitfähiges, optisch durchgängiges System; 22 = elektrolumineszierende Haftklebemasse; 23 = elektrisch leitfähiges, optisch reflektierendes System). Als elektrisch leitfähige, optisch reflektierende Systeme lassen sich beispielsweise Metallfolien, wie Aluminiumfolien oder dergleichen, vorteilhaft einsetzen.

Ein weiterer Gegenstand der Erfindung ist die Verwendung elektrolumineszenzfähiger Haftklebemassen, insbesondere elektrolumineszenzfähiger Haftklebefilme, ganz besonders einschichtiger, trägerloser Haftklebemassenschichten, zur Verklebung von Bauteilen in der Elektronikindustrie. Hierzu können auch alle im Rahmen dieser Schrift aufgeführten Klebebänder eingesetzt werden.

Dieses Einsatzgebiet ist insbesondere vorteilhaft, wenn die zu verklebenden Bauteile von hinten beleuchtet werden sollen, wie dies beispielsweise bei optischen Anzeigeeinheiten ("Displays") von Vorteil sein kann. Es ist dann nicht mehr notwendig, das Display - oder das jeweilige zu verklebende Bauteil - selbstleuchtend zu gestalten oder zusätzliche Beleuchtungseinheiten in das elektronische Element, welches das Display oder das Bauteil beinhaltet, zu integrieren; vielmehr kann die Haftklebemasse die Funktion der Haftvermittlung zwischen den zu verbindenden Bauteilen und die Beleuchtungsfunktion in sich vereinen. Ein weiterer Vorteil ergibt sich daraus, dass die Haftklebemasse - ganz besonders als trägerlose Schicht - geometrieflexibel eingesetzt werden kann. Es können also Bauteile unterschiedlicher Geometrien verklebt werden und gleichzeitig der vorstehend dargestellte Funktionalitätsvorteil genutzt werden. So lassen sich beispielsweise Unebenheiten in den Oberflächen der zu verklebenden Substrate ausgleichen und damit optische Störstellen, wie sie beispielsweise bei der Verklebung selbstleuchtender Folien auf unebenen Untergründen resultieren können, vermeiden.

Weitere Einsatzgebiete für die erfindungsgemäßen Haftklebemassen sind - neben den bereits erwähnten Verklebungen von Displays zum Beispiel in Mobiltelefonen, PDAs, Computern und Monitoren, Geräten der Unterhaltungselektronik (wie extra großen Fernsehern) - die Verklebung von (insbesondere hintergrundbeleuchteten) Sicherheitseinrichtungen, wie Notbeleuchtungs-systemen und Hinweisschildern in öffentlichen Gebäuden (z.B. Krankenhäusern) und Transportmitteln (z.B. Flugzeugen), sowie der Einsatz im Automotivebereich, beispielsweise im Bereich der Armaturenbeleuchtung und der Türbeleuchtungen.

Ferner kann die erfindungsgemäße Haftklebemasse bzw. ein entsprechendes Klebeband beispielsweise zu Beleuchtungszwecken bei leuchtenden Schaltern, Wegmarkierungen (Fluchtwege, Gehwege, Fahrbahnen), Garagen- oder Kellerbeleuchtungen mit moderatem Licht, Nachtlampen als Orientierungshilfen, Beleuchtung und Markierung von Sicherheitsausrüstungen (Atemschutzgeräte, Notausgänge), Beleuchtungen zur Verkehrsleitung (Verkehrsschilder, Bojen).

Weiterhin eignet sich die erfindungsgemäße Haftklebemasse zur Verwendung für beleuchtete Sportgeräte (Kugeln, Bälle, Schläger) und Spielzeuge (Carrerabahn), leuchtende Textilien, Innenbeleuchtung von Behältern und Taschen, als blendfreie Reflektorlampe, für beleuchtete Grußkarten, für "elektronisches" Papier (beispielsweise für Speisekarten), zu Dekorationszwecken (Messebau, Gastronomie) beispielsweise als leuchtende Vorhänge, Raumteiler oder Leuchtkabel. Weitere Anwendungsfelder sind die Beleuchtung von Aquarien, Fahrstühlen, Zelten und Pavillons, Gartenbeleuchtung, Unterwasserbeleuchtung, Beleuchtung von Möbeln und Schubladen.

Zur Kontaktierung sollten die zu verklebenden Substrate elektrisch leitfähig sein. Gegebenenfalls kann es notwendig sein, die zu verklebenden Substrate und/oder die Untergründe, auf die verklebt werden soll, elektrisch leitfähig auszurüsten. Die entsprechende Ausrüstung mit leitfähigen Eigenschaften kann beispielsweise durch Metallisierung (z.B. durch Besputterung) geschehen. Eine weiter vorteilhafte Vorgehensweise ist die Einbringung für sichtbares Licht transparenter, elektrisch leitfähiger Schichten oder Beschichtungen, zum Beispiel von ITO- oder FTO-Schichten bzw. Beschichtungen (ITO = Indiumzinnoxid, FTO = Fluordotiertes Zinnoxid). Die Beschichtung kann nach dem Fachmann geläufigen Vorgehensweisen geschehen. Die vorgenannten Materialien haben den Vorteil, gleichzeitig transparent und elektrisch leitfähig zu sein. Gleichzeitig haben diese Schichten ein hohes Infrarotreflexionsvermögen.

Durch Anlegen einer Wechselspannung, vorzugsweise einer Spannung im Bereich von 50 V bis 300 V, an die als Elektroden dienenden elektrisch leitfähigen Substrate, zwischen denen sich die Haftklebemasse befindet, werden die elektrolumineszenzfähigen Zusätze einem elektrischen Wechselfeld ausgesetzt und so zum Leuchten angeregt. Der vorstehend angegebene Spannungsbereich kann insbesondere für bestimmte Anwendungsbereiche aber auch unter- oder überschritten werden. So kann es für sehr dünne Schichtdicken der Haftklebemasse beispielsweise vorteilhaft sein, mit geringeren Spannungswerten als 50 V eine für die Lumineszenz ausreichende Feldstärke zu erzeugen, während für besonders dicke Haftklebeschichten und aus der Haftklebemasse gebildete dreidimensionale Körper sehr hohe, also über 300 V liegende Spannungswerte von Vorteil sein können, um eine gewünschte Beleuchtungsstärke zu bedingen.

Das elektrische Wechselfeld zur Erzeugung der Lumineszenz weist vorteilhaft eine Frequenz von 40 Hz bis 3000 Hz auf, vorteilhafter zwischen 200 Hz und 2000 Hz, noch vorteilhafter zwischen 350 Hz und 1000 Hz. In einer weiteren vorteilhaften Vorgehensweise wird ein Wechselfeld mit 50 Hz gewählt. So kann beispielsweise bei 230 V/50 Hz, also mit der in europäischen Stromnetzen üblichen Spannung und Frequenz, gearbeitet werden, um auf den Einsatz von Frequenzwandlern verzichten zu können. Eine weitere vorteilhafte, beispielhaft genannte Alternative ist die Wahl von 110 V / 60 Hz (US-amerikanisches Stromnetz).

Umfasst durch den erfindungsgemäßen Gedanken werden weiterhin ein- oder beidseitig mit der erfindungsgemäßen Haftklebemasse ausgerüstete Klebebänder, bei denen weiterhin insbesondere ein permanenter Träger vorgesehen ist. Auf diese Art können beispielsweise zwei- (Trägerschicht, Haftklebeschicht) und dreischichtige (Haftklebeschicht, Trägerschicht, Haftklebeschicht) Klebeband-Produktaufbauten realisiert werden. Insbesondere ist es vorteilhaft, wenn der permanente Träger elektrisch leitfähig ausgestaltet ist.

Sehr vorteilhaft kann als Basis-Haftklebemasse eine transparente Haftklebemasse eingesetzt werden, um die Beleuchtungsstärke der elektrolumineszierenden Zusätze optimal nutzen zu können. Bei Produktaufbauten, bei denen eine Trägerschicht mit der Haftklebemasse ausgerüstet ist, ist es von Vorteil, die Trägerschicht hell oder insbesondere reflektierend auszugestalten, um den Leuchteffekt noch zu verstärken.

Prinzipiell ist für die Haftklebeschichten bezüglich ihrer Dicke keine obere Grenze gegeben. Die Erzeugung der Lumineszenz für verschieden dicke Schichten ist dabei abhängig von der Stärke des elektrischen Feldes. Ist das Feld stark genug, lassen sich selbst in sehr dicken Haftklebemassenschichten oder auch in dreidimensionalen Gebilden aus der erfindungsgemäßen Haftklebemasse die elektrolumineszenzfähigen Zusatzstoffe zum Leuchten anregen. Je stärker das elektrische Wechselfeld gewählt wird, desto dicker lässt sich die Haftklebemassenschicht ausgestalten. So lassen sich beliebig dünne Haftklebeschichten bis hin zu sehr dicken Haftklebeschichten elektrolumineszierend ausgestalten.

In bevorzugter Ausgestaltung liegt die Schichtdicke einer erfindungsgemäßen Haftklebeschicht zwischen 20 $\mu$m und 200 $\mu$m, vorzugsweise zwischen 50 $\mu$m und 100 $\mu$m. In diesem Bereich der Schichtdicke lassen sich mit Spannungen, wie sie in den Stromnetzen üblich sind, gute Werte für die Leuchtstärke erzielen, ohne dass die Haftklebeschicht dabei zu warm und dadurch bezüglich ihrer Haltbarkeit beeinträchtigt wird.

**Beispiele**

Zur weiteren Dokumentation der Erfindung wurden einige Probenmuster (auch: "Muster") hergestellt und untersucht, ohne sich durch die Wahl der Haftklebemassen und Probenparameter in der Erfindungsidee unnötig beschränken zu wollen.

Herstellung einer Basishaftklebemasse (Polyacrylatbasis)

Ein für radikalische Polymerisationen konventioneller 2-L-Glasreaktor wurde mit 20 g (5 Gew.-%) Acrylsäure, 80 g (20 Gew.-%) Methylacrylat und 300 g (75 Gew.-%) 2-Ethylhexylacrylat sowie 266 g Lösemittelgemisch [Aceton / Siedegrenzbenzin 60.95 / Isopropanol (47:50:3)] befüllt. Nachdem unter Rühren für 45 Minuten Stickstoffgas durch den Reaktionsansatz geleitet worden war, wurde der Reaktor auf eine Temperatur von 58 °C geheizt und 0,2 g 2,2'-Azobis (2-methylbutyronitril), Handelsname Vazo 67™, DuPont] hinzugegeben. Anschließend wurde das äußere Heizbad auf eine Temperatur von 75 °C erwärmt und die Reaktion konstant bei dieser Temperatur durchgeführt. Nach einer Stunde Reaktionszeit wurden weitere 0,2 g 2,2'-Azobis(2-methylbutyronitril) hinzugegeben. Nach 4 und 8 Stunden wurde jeweils mit weiteren 100 g des Lösemittelgemisches verdünnt. Zur Reduktion der Restinitiatoren wurden nach 8 und nach 10 Stunden jeweils 0,6 g Bis-(4-tert.-butylcyclohexanyl)-peroxy-dicarbonat [Handelsname: Perkadox 16™, Akzo Nobel] hinzugegeben. Die Reaktion wurde nach 24 Stunden abgebrochen und die Reaktionsmischung auf Raumtemperatur abgekühlt. Anschließend wurde das Polyacrylat mit 0,3 Gew.-% Aluminium-(III)-acetylacetonat (Zugabe als 3%ige Lösung in Aceton) abgemischt (Mengenanteilsangabe bezogen auf das Polymer).

Herstellung_der_mit_Elektrolumineszenzpigmenten versehenen Haftklebemassen

Die wie vorstehend hergestellte Haftklebemasse wurde mit elektrolumineszierenden Pigmenten mit den folgenden Füllgraden (Mengenanteilsangaben bezogen auf die additivierte Haftklebemasse) vermischt.

- reine Basishaftklebemasse (Vergleichsprobe): Haftklebemasse H 0
- 25 Gew.-% GlacierGLO® GG43: Haftklebemasse H 1
- 37,5 Gew.-% GlacierGLO® GG43: Haftklebemasse H 2
- 50 Gew.-% GlacierGLO® GG43: Haftklebemasse H 3

GlacierGLO® GG43: Kupferaktiviertes Zinksulfid (Herstellerangabe: Zinc Sulfide : Copper activated; Zusammensetzung: Zinc Sulfide (CAS 1314-98-3) zu 92 bis 95 %; Aluminium Oxide Hydroxide (CAS 24623-77-6) zu 5 bis 8 %).
Zur Herstellung der Probenmuster für die einzelnen Messungen wurden die vorstehend beschriebenen Haftklebemassen H 0 bis H 3 auf das entsprechende Substrat (Träger) mit einer Auftragsstärke von 50 $\mu$m beschichtet, getrocknet und bei 120 °C 15 Minuten vernetzt.

Probenmuster für die Tests A, B, C1 und C2

Zur Herstellung der zu untersuchenden Probenmuster für die Tests A, B, C1 und C2 wurde als Substrat (Träger) ein Standardpolyesterträger mit einer Stärke von 23 $\mu$m gewählt. Es wurden Klebebandproben mit den Haftklebemassen H 0, H 1, H 2 und H 3 (entsprechende Probenmuster M 0, M 1, M 2 und M 3) hergestellt.

180° Klebkrafttest (Test A)

Ein 20 mm breiter Streifen des jeweiligen Probenmusters (Klebeband) wurde auf Stahlplatten aufgebracht. Die Stahlplatten wurden zuvor viermal mit Aceton gewischt und mindestens 1 Minute, maximal 10 Minuten, an der Luft liegen gelassen. Der Haftklebestreifen wurde zehnmal mit einer 4 kg schweren Rolle auf das Substrat aufgedrückt. Das Klebeband wurde anschließend sofort mit 300 mm/min und im 180° Winkel vom Substrat abgezogen. Die Messergebnisse sind in N/cm angegeben und sind gemittelt aus drei Messungen. Alle Messungen wurden bei Raumtemperatur durchgeführt.
Analog wurde die Klebkraft auf Polyethylen (PE) bestimmt. Als definierter Haftgrund (Klebkraftplatte) wurde eine Polyethylen-Platte eingesetzt, die als Prüfplatte im Spritzgussverfahren aus HDPE-Granulat Hostalen GC7260 Firma Basell hergestellt worden war. Vor einer Messung wurde diese Platte mit Ethanol gereinigt und mindestens 2 Stunden an der Luft liegen gelassen. Ein 20 mm breiter Streifen des jeweiligen Probenmusters (Klebeband) wurde zehnmal mit einer 4 kg schweren Rolle auf das Substrat aufgedrückt. Unmittelbar im Anschluss daran wurde das Klebeband in einem Winkel von 180 ° vom Substrat mit einer Geschwindigkeit von 300 mm/min abgezogen und die hierfür bei Raumtemperatur benötigte Kraft gemessen. Der Messwert (in N/cm) ergab sich als Mittelwert aus drei Einzelmessungen. Zur Kalibrierung des Messverfahrens wurde ein kommerzielles Testklebeband zur Prüfung von nichtklebenden Beschichtungen (Typ "tesa 7475" der tesa AG; Klebkraft auf Stahl laut Spezifikation: 31,25 N/25 mm) entsprechend diesem Messverfahren untersucht; die hierbei ermittelte Klebkraft auf der Polyethylen-Prüfplatte betrug 4,5 N/cm.

Scherstandzeit (Test B)

Ein 13 mm breiter Streifen des jeweiligen Probenmusters (Klebeband) wurde auf eine Stahlplatte aufgebracht. Die Stahlplatten wurden zuvor viermal mit Aceton gewischt und mindestens 1 Minute, maximal 10 Minuten, an der Luft liegen gelassen. Die Auftragsfläche betrug 20 mm * 13 mm (Länge * Breite). Anschließend wurde das Klebeband durch eine Rolle mit einem Gewicht von 2 kg viermal auf den Stahlträger gedrückt. Es wurde ein 1 kg-Gewicht an dem Klebeband befestigt. Die gemessenen Scherstandzeiten sind in Minuten angegeben und entsprechen dem Mittelwert aus drei Messungen. Die Messung wird bei Normalklima (23 °C, 50 % rel. Feuchte; DIN 50014-23/50-1) sowie bei 40 °C und bei 70 °C in einem Wärmeschrank durchgeführt.

Mikroschertest und SAFT-Test (Shear Adhesive Failure Temperature) (Tests C)

Dieser Test dient der Schnellprüfung der Scherfestigkeit von Klebebändern unter Temperaturbelastung.
Messprobenpräparation für Mikroschertest und SAFT:

Ein aus dem jeweiligen Probenmuster geschnittenes Klebeband (Länge ca. 50 mm, Breite 10 mm,) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe x Breite = 13mm x 10mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest (Test C1):*

Das zu messende Probenmuster wird am unteren Ende mit einem Gewicht von 100 g belastet. Die Prüftemperatur beträgt 40 °C, die Prüfdauer 30 Minuten (15 Minuten Belastung und 15 Minuten Entlastung). Die Scherstrecke nach der vorgegebenen Testdauer bei konstanter Temperatur wird als Ergebnis in $\mu$m angegeben, und zwar als Maximalwert ["max"; maximale Scherstrecke durch 15 minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil = (max - min)*100 / max].

*SAFT (Test C2):*

Das zu vermessende Probenmuster wird am unteren Ende mit einem Gewicht von 50 g belastet. Die Stahl-Prüfplatte mit dem verklebten Probenmuster wird beginnend bei 25 °C mit einer Rate von 9 °C pro Minute auf die Endtemperatur von 200 °C aufgeheizt. Gemessen wird der Rutschweg des Probenmusters ("SAFT-Scherweg") mittels Wegmessfühler in Abhängigkeit von Temperatur und Zeit. Der maximale Rutschweg ist auf 1000 $\mu$m festgelegt, bei Überschreiten wird der Test abgebrochen.

<u>Beleuchtungsstärke (Test D)</u>

Die Beleuchtungsstärke (in Lux, lx) ist ein Maß für die Helligkeit der elektrolumineszierenden Haftklebemassen.

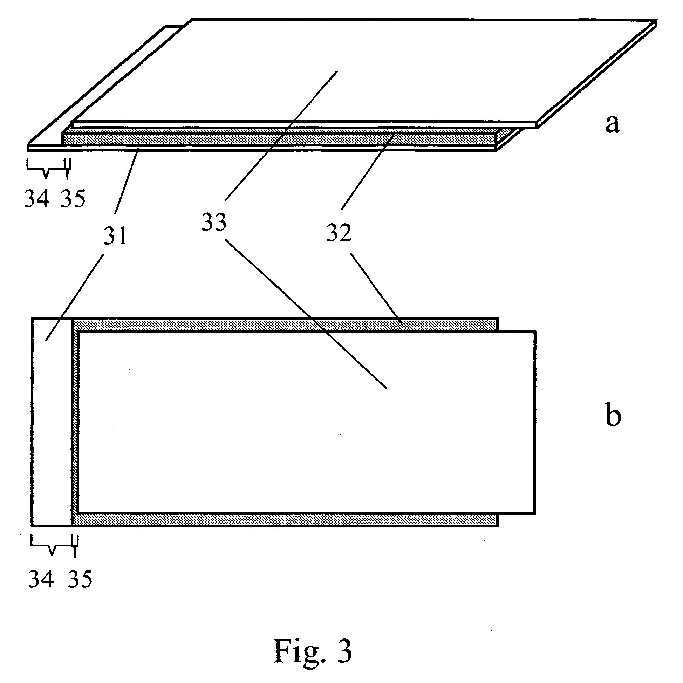

Die zu untersuchenden Haftklebemassen (H 1 bis H 3) wurden auf Trennpapier als Substrat (Träger) mit einem Masseauftrag von 50 $\mu$m beschichtet, getrocknet und vernetzt (120 °C, 15 min) und dann auf eine 10,5 cm * 5,4 cm große ITO-Folie (OC50, Fa: CPFilms) umlaminiert, so dass auf einer der kurzen Seiten ein 1 cm breiter, nicht beschichteter Randbereich zur Kontaktierung verblieb. Mit einem Versatz von 1 mm wurde eine zweite, 10,5 cm * 4,5 cm große ITO-Folie (ebenfalls OC50, CPFilms) auf die andere Seite der Haftklebemassenschicht laminiert. Zur Veranschaulichung siehe Fig. 3, a = perspektivische Ansicht, b = Aufsicht; es bedeuten: 31 = erste (untere) ITO-Folie (10,5 cm * 5,4 cm), 32 = Haftklebeschicht (Probe), 33 = zweite (obere) ITO-Folie (10,5 * 4,5 cm), 34 = Randbereich der unteren ITO-Folie zur Kontaktierung, 35 = Versatz der oberen ITO-Folie auf der Haftklebeschicht.

Aus jeder der Haftklebemassen H1, H2 und H3 wurden jeweils drei identische Probenmuster hergestellt (siehe folgende Aufstellung).

- 25 Gew.-% GlacierGLO® GG43: Muster M1.1, M 1.2, M 1.3
- 37,5 Gew.-% GlacierGLO® GG43: Muster M 2.1, M 2.2, M 2.3
- 50 Gew.-% GlacierGLO® GG43: Muster M 3.1, M 3.2, M 3.3

Es wurden die unmittelbar zuvor hergestellten neun Probenmuster ("frisch"), als auch nach definierten Lagerbedingungen gelagerte Muster jeweils nach einer und nach drei Wochen Lagerzeit untersucht. Zu den Lagerbedingungen der einzelnen Muster siehe folgende Aufstellung:

Lagerbedingung 1:  Trockenmittel, Raumtemperatur (RT; 23 °C), Exsikkator Muster M 1.1; M 2.1 und M 3.1
Lagerbedingung 2:  Temperatur 23 °C, 50 % relative Feuchte, Klimaschrank Muster M 1.2; M 2.2 und M 3.2
Lagerbedingung 3:  Temperatur 40 °C, 80 % relative Feuchte, Klimaschrank Muster M 1.3; M 2.3 und M 3.3

Vor der Messung der Beleuchtungsstärke wurden die Muster jeweils eine Stunde lang im Exsikkator bei Raumtemperatur unter Trockenmittel getempert, um identische Messbedingungen für die jeweiligen Messreihen zu schaffen.

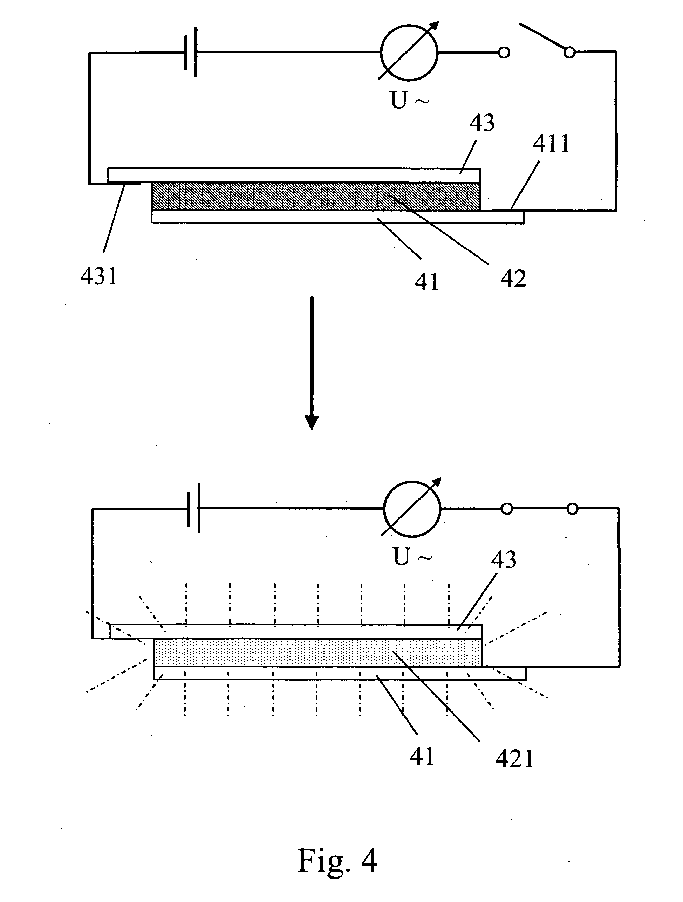

Die Messung erfolgt in einer Schaltung in Analogie zu Fig. 4, unten (41 = untere ITO-Folie, 411 = Kontaktierung der unteren ITO-Schicht, 43 = obere ITO-Schicht, 431 = Kontaktierung der oberen ITO-Schicht, 421 = leuchtende Haftklebemasse). Die Messungen erfolgten bei Raumtemperatur, mit den entsprechenden Spannungs- und Frequenzwerten wie in der Tabelle 2 angegeben.

Die Beleuchtungsstärke wurde mit einem VOLTCRAFT Light Meter Lx-1108 mit einer Standard-Messsonde gemessen, indem der Messsensor direkt (kein Abstand Probenmuster - Messsensor), zentriert und unter Ausschluss von Umgebungslicht unter dem Probenmuster platziert wurde. Der Wert in Lux ist unmittelbar ablesbar. Die Ablesung erfolgte 30 Sekunden nach dem Einschalten der Spannungsversorgung mit entsprechender Frequenz (konstant bleibende Anzeige).

Messergebnisse

Tabelle 1: Übersicht über die klebtechnischen Eigenschaften:

| Haftklemasse | | Klebkraft Test A | | Scherstandzeiten Test B | | |
|---|---|---|---|---|---|---|
| | | Stahl | PE | 23 °C | 40 °C | 70 °C |
| Muster | Anteil GG43* | [N/cm] | [N/cm] | [min.] | [min.] | [min.] |
| M 0 | - | 4,7 | 1,4 | >10000 | >10000 | >10000 |
| M 1 | 25,0% | 4,2 | 1,3 | >10000 | >10000 | >10000 |
| M 2 | 37,5% | 4,5 | 1,2 | >10000 | >10000 | >10000 |
| M 3 | 50,0% | 2,9 | 0,6 | >10000 | >10000 | >10000 |

| Haftklebemasse | | Mikroschertest Test C1 | | | SAFT Test C2 | |
|---|---|---|---|---|---|---|
| | | max. | min. | elast. | Temperatur | Scherweg |
| Muster | Anteil GG43* | [μm] | [μm] | [%] | [°C] | [μm] |
| M 0 | - | 19 | 5 | 74 | 200 | 1000 |
| M 1 | 25,0% | 14 | 5 | 64 | 200 | 678 |
| M 2 | 37,5% | 20 | 6 | 70 | 200 | 710 |
| M 3 | 50,0% | 10 | 4 | 60 | 200 | 678 |
| * Elektrolumineszenzfähiger Zusatz: GlacierGLO® GG43: Kupferaktiviertes Zinksulfid | | | | | | |

## Tabelle 2: Beleuchtungsstärkemessung:

| U [V] | f [Hz] | frisch M 1.1 | M 1.2 | M 1.3 | 1 Woche M 1.1 trocken [lx] | M 1.2 23 °C 50% rF [lx] | M 1.3 40 °C 80% rF [lx] | 3 Wochen M 1.1 trocken [lx] | M 1.2 23 °C 50% rF [lx] | M 1.3 40°C 80% rF [lx] |
|---|---|---|---|---|---|---|---|---|---|---|
| 25 % GG43* | 100 / 400 | 4 | 2 | 3 | | | | | | |
| | 100 / 700 | 6 | 4 | 4 | | | | | | |
| | 100 / 1000 | 8 | 6 | 6 | | | | | | |
| | 200 / 400 | 18 | 17 | 18 | | | | | | |
| | 200 / 700 | 29 | 27 | 27 | 28 | 27 | 29 | 27 | 28 | 30 |
| | 200 / 1000 | 36 | 34 | 35 | | | | | | |
| | 300 / 400 | 36 | 35 | 35 | | | | | | |
| | 300 / 700 | 59 | 57 | 58 | | | | | | |
| | 300 / 1000 | 79 | 73 | 73 | | | | | | |

| U [V] | f [Hz] | frisch M 2.1 | M 2.2 | M 2.3 | 1 Woche M 2.1 trocken [lx] | M 2.2 23 °C 50% rF [lx] | M 2.3 40 °C 80% rF [lx] | 3 Wochen M 2.1 trocken [lx] | M 2.2 23 °C 50% rF [lx] | M 2.3 40 °C 80% rF [lx] |
|---|---|---|---|---|---|---|---|---|---|---|
| 37,5 % GG43* | 100 / 400 | 8 | 5 | 7 | | | | | | |
| | 100 / 700 | 13 | 10 | 12 | | | | | | |
| | 100 / 1000 | 18 | 14 | 16 | | | | | | |
| | 200 / 400 | 45 | 39 | 43 | | | | | | |
| | 200 / 700 | 69 | 62 | 66 | 67 | 64 | 70 | 66 | 66 | 73 |
| | 200 / 1000 | 86 | 79 | 86 | | | | | | |
| | 300 / 400 | 89 | 84 | 86 | | | | | | |
| | 300 / 700 | 140 | 130 | 135 | | | | | | |
| | 300 / 1000 | 188 | 168 | 175 | | | | | | |

| U [V] | f [Hz] | frisch M 3.1 | M 3.2 | M 3.3 | 1 Woche M 3.1 trocken [lx] | M 3.2 23 °C 50% rF [lx] | M 3.3 40 °C 80% rF [lx] | 3 Wochen M 3.1 trocken [lx] | M 3.2 23 °C 50% rF [lx] | M 3.3 40 °C 80% rF [lx] |
|---|---|---|---|---|---|---|---|---|---|---|
| 50% GG43* | 100 / 400 | 18 | 16 | 16 | | | | | | |
| | 100 / 700 | 30 | 24 | 23 | | | | | | |
| | 100 / 1000 | 36 | 32 | 31 | | | | | | |
| | 200 / 400 | 82 | 74 | 74 | | | | | | |
| | 200 / 700 | 126 | 115 | 114 | 125 | 117 | 120 | 125 | 119 | 124 |
| | 200 / 1000 | 162 | 150 | 148 | | | | | | |
| | 300 / 400 | 153 | 143 | 144 | | | | | | |
| | 300 / 700 | 239 | 220 | 223 | | | | | | |
| | 300 / 1000 | 311 | 286 | 287 | | | | | | |

* Elektrolumineszenzfähiger Zusatz: GlacierGLO® GG43: Kupferaktiviertes Zinksulfid
n = Menge an elektrolumineszenzfähigen Zusatzstoffen in der Haftklebemasse [Angaben in Gew.-%],
U = Spannung [Angaben in Volt], f = Frequenz [Angaben in Hertz]; rF = relative Feuchte
Alle Angaben der Beleuchtungsstärken in Lux

Es konnte gezeigt werden, dass die klebtechnischen Eigenschaften auch bei Beimischung elektrolumineszenzfähiger Zusätze gut bleiben (Tabelle 1). Erst bei sehr hohen Abmischungen (Probe 3) ist ein Klebkraftverlust (Test A) zu beobachten, eine Klebkraft als solche bleibt aber bestehen. Bei der Bestimmung der Scherstandzeiten nach Test B konnte keine Veränderung festgestellt werden. In Test B ist eine leichte Verbesserung der Scherfestigkeit festzustellen, wobei aber alle Messergebnisse oberhalb der definierten Grenze von 10.000 Minuten lagen. Beim SAFT-Test (C2) ist eine leichte Verbesserung der Kurzzeit-Temperaturbeständigkeit festzustellen (Scherweg bei 200 °C).

Die Abhängigkeit der Beleuchtungsstärke von der angelegten Spannung und der Frequenz zeigt Tabelle 2 anhand der Messwerte der Frischmuster. Jeweils anhand der beispielhaften Wahl der Messparameter Spannung = 200 V, Frequenz = 700 Hz konnte für die drei Proben gezeigt werden, dass auch nach ein- und nach dreiwöchiger Lagerung kein Verlust der elektrolumineszierenden Eigenschaften zu beobachten war. Somit kam es zu keiner signifikanten Alterung der Muster. Auch waren in den Randbereichen, in denen die Masse während der Lagerung direkten Kontakt zur Luftfeuchtigkeit hat, keine entstandenen Höfe oder Fehlstellen zu beobachten. Die Leuchtkraft scheint mit steigender Lagertemperatur und steigender -feuchte sogar leicht angestiegen zu sein.

Die erfindungsgemäßen Haftklebemassen sind somit hervorragend geeignet, selbstleuchtende und selbstklebende Schichten zur Verfügung zu stellen. Bringt man die erfindungsgemäßen Haftklebemassen in ein elektrisches Wechselfeld ein, so zeigen die Haftklebemassen das Phänomen der Elektrolumineszenz. Siehe Fig. 4, oben: Es existiert kein elektrisches Wechselfeld. 41 = untere ITO-Folie, 411 = Kontaktierung der unteren ITO-Schicht, 42 = Haftklebemasse (nicht leuchtend ohne Wechselfeld), 43 = obere ITO-Schicht, 431 = Kontaktierung der oberen ITO-Schicht. Den Zustand nach Anlegen eines eklektrischen Wechselfeldes zeigt Fig. 4, unten: 421 = Haftklebemasse, leuchtend im elektrischen Wechselfeld (symbolisiert durch hellere Farbe und Strahlenkranz (Punkt-Strich-Linien; ___).

Durch den Anteil der elektrolumineszierenden Zusatzstoffe in der Haftklebemasse und die Stärke und die Frequenz des elektrischen Wechselfeldes lässt sich die Leuchtkraft der Haftklebemasse regulieren. Somit lässt sich insbesondere bei dem Einsatz in der Elektronikindustrie, zum Beispiel als Haftklebemasse zur Verklebung von LC-Displays, die Haftklebemasse selbst zur Beleuchtung der elektronischen Bauteile (insbesondere der LC-Displays) einsetzen, wobei die Beleuchtungsstärke durch Steuerung des angelegten elektrischen Feldes den jeweiligen Lichtverhältnissen angepasst werden kann, so dass jederzeit eine optimale Erkennung des Displays garantiert ist. Die Funktionen der Verklebung und der Beleuchtung sind somit in der Haftklebemasse vereint.

Die Bereitstellung der erfindungsgemäßen Haftklebemassen kann beispielsweise in Form der reinen elektrolumineszierenden Haftklebemasse auf einem temporären Träger (Trennpapier, Liner oder dergleichen) geschehen. Der Anwender hat dann die Möglichkeit, sein Elektrolumineszenzsystem auf beliebige Substrate lösemittelfrei und ohne weiteren Bedarf an Trocknungs- und/oder Vernetzungssystemen zu laminieren.

Eine weitere günstige Anbietungsform liegt vor, indem die elektrolumineszierende Haftklebemasse auf einen optisch durchgängigen, elektrisch leitfähigen Träger (beispielsweise eine ITO-Folie) einseitig beschichtet oder laminiert ist. Der Anwender hat somit die Möglichkeit, das haftklebrige, einseitige System auf praktisch jedem elektrisch leitfähigen Material zu verkleben. Er könnte somit zum Beispiel eine Display-Beleuchtung direkt auf dem elektrisch leitfähig ausgestatteten Hintergrund (zum Beispiel aus entsprechend elektrisch leitfähig ausgestatteten Kunststoff, beispielsweise durch Russfüllung, Metallbedampfung oder anderweitig) verkleben und spart somit Prozessschritte und das üblicherweise zum Verkleben benötigte Transferklebeband.

Zwei weitere günstige Anbietungsvarianten der Erfindung sind der Verbund aus zwei ITO-Folien, die eine Schicht der erfindungsgemäßen Haftklebemasse einschließen, und der Verbund aus einer ITO-Folie, einem optisch reflektierenden Substrat und einer Schicht der erfindungsgemäßen Haftklebemasse zwischen der ITO-Folie und dem Substrat.

**Patentansprüche**

1. Klebemasse enthaltend zumindest einen elektrolumineszenzfähigen Zusatzstoff, **dadurch gekennzeichnet,** **dass** die Klebemasse als Haftklebemasse auf Polyacrylat- oder Silikonbasis ausgebildet ist, **dass** die Haftklebemasse ein Dielektrikum bereitstellt, und **dass** der Anteil der elektrolumineszenzfähigen Zusatzstoffe in der Haftklebemasse, bezogen auf die mit den Zusatzstoffen versehene Haftklebemasse, mindestens 25 Gew.-%, vorzugsweise mindestens 37,5 Gew.-%, weiter vorzugsweise mindestens 50 Gew.-%, und bis zu 60 Gew.-% beträgt.

2. Haftklebemasse nach Anspruch 1, **dadurch gekennzeichnet,** **dass** die Haftklebemasse vernetzt ist.

3. Haftklebemasse nach Anspruch 2, **dadurch gekennzeichnet,** **dass** der elastische Anteil mindestens 40 %, vorzugsweise mindestens 50 %, weiter vorzugsweise mindestens 60 % beträgt.

4.  Haftklebemasse nach einem der vorangehenden Ansprüche, **dadurch gekennzeichnet, dass** dieselbe jedenfalls im sichtbaren Bereich transparent ist.

5.  Haftklebemasse nach einem der vorangehenden Ansprüche, **dadurch gekennzeichnet, dass** der elektrolumineszenzfähige Zusatzstoff gekapselt ist.

6.  Haftklebemasse nach einem der vorangehenden Ansprüche, **dadurch gekennzeichnet, dass** die minimale Beleuchtungsstärke bei 200 V / 700 Hz 15 lx, vorzugsweise 30 lx, weiter vorzugsweise 70 lx, beträgt.

7.  Haftklebemasse nach einem der vorangehenden Ansprüche, **dadurch gekennzeichnet, dass** der Haftklebemasse optische Aufheller beigemischt sind, insbesondere Stilben-, Ethylen-, Coumarin-, Naphtalimid- und/oder Pyrazolderivate.

8.  Haftklebemasse nach Anspruch 7, **dadurch gekennzeichnet, dass** die optischen Aufheller mit einem Füllgrad von bis zu 5 Gew.-% der Haftklebemasse beigemischt sind.

9.  Haftklebemasse nach einem der vorangehenden Ansprüche, **dadurch gekennzeichnet, dass** der Haftklebemasse Farbpigmente beigemischt sind, insbesondere Azopigmente, Mineralfarbpigmente und/ oder Teefarbpigmente.

10. Haftklebemasse nach Anspruch 9, **dadurch gekennzeichnet, dass** die Farbpigmente mit einem Füllgrad von bis zu 5 Gew.-% der Haftklebemasse beigemischt sind.

11. Haftklebemasse nach Anspruch 9 oder 10, **dadurch gekennzeichnet, dass** der Haftklebemasse als Farbpigmente Zinkoxid, Titandioxid, Siliziumdioxid und/oder Zirkoniumdioxid beigemischt sind.

12. Klebeband mit einer Haftklebemasse, **dadurch gekennzeichnet, dass** die Haftklebemasse gemäß einem der vorangehenden Ansprüche ausgebildet ist.

**Claims**

1.  Adhesive comprising at least one electroluminescent additive, **characterized in that** the adhesive takes the form of a polyacrylate-based or silicone-based pressure-sensitive adhesive (PSA), **in that** the PSA provides a dielectric, and
    **in that** the fraction of the electroluminescent additives in the PSA, based on the additized PSA, is at least 25%, preferably at least 37.5%, more preferably at least 50%, and up to 60% by weight.

2.  Pressure-sensitive adhesive according to Claim 1, **characterized in that** the PSA is crosslinked.

3.  Pressure-sensitive adhesive according to Claim 2, **characterized in that** the elastic component is at least 40%, preferably at least 50%, more preferably at least 60%.

4.  Pressure-sensitive adhesive according to any one of the preceding claims, **characterized in that** the same is transparent at least in the visible range.

5.  Pressure-sensitive adhesive according to any one of the preceding claims, **characterized in that** the electroluminescent additive is encapsulated.

6.  Pressure-sensitive adhesive according to any one of the preceding claims, **characterized in that** the minimum illuminance at 200 V / 700 Hz is 15 lx, preferably 30 lx, more preferably 70 lx.

7.  Pressure-sensitive adhesive according to any one of the preceding claims, **characterized in that** optical brighteners have been admixed to the pressure-sensitive adhesive, more particularly stilbene derivatives, ethylene derivatives, coumarin derivatives, naphthalimide derivatives and/or pyrazole derivatives.

8. Pressure-sensitive adhesive according to Claim 7, **characterized in that** the optical brighteners are admixed to the pressure-sensitive adhesive with a degree of filling of up to 5% by weight.

9. Pressure-sensitive adhesive according to any one of the preceding claims, **characterized in that** color pigments are admixed to the pressure-sensitive adhesive, more particularly azo pigments, mineral color pigments and/or tea color pigments.

10. Pressure-sensitive adhesive according to Claim 9, **characterized in that** the color pigments are admixed to the pressure-sensitive adhesive with a degree of filling of up to 5% by weight.

11. Pressure-sensitive adhesive according to Claim 9 or 10, **characterized in that** zinc oxide, titanium dioxide, silicon dioxide and/or zirconium dioxide are admixed as color pigments to the pressure-sensitive adhesive.

12. Adhesive tape comprising a pressure-sensitive adhesive, **characterized in that** the pressure-sensitive adhesive takes the form of any one of the preceding claims.


**Revendications**

1. Masse adhésive contenant au moins un additif électroluminescent, **caractérisé en ce que** la masse adhésive est réalisée sous forme de masse autoadhésive à base de polyacrylate ou de silicone, **en ce que** la masse autoadhésive est un diélectrique, et en ce que la proportion des additifs électroluminescents dans la masse autoadhésive, par rapport la masse autoadhésive pourvue des additifs, est d'au moins 25% en poids, de préférence d'au moins 37,5% en poids, plus préférablement d'au moins 50% en poids, et jusqu'à 60% en poids.

2. Masse autoadhésive selon la revendication 1, **caractérisée en ce que** la masse autoadhésive est réticulée.

3. Masse autoadhésive selon la revendication 2, **caractérisée en ce que** la proportion élastique est d'au moins 40%, de préférence d'au moins 50%, plus préférablement d'au moins 60%.

4. Masse autoadhésive selon l'une quelconque des revendications précédentes, **caractérisée en ce qu'**elle est en tout cas transparente dans la plage visible.

5. Masse autoadhésive selon l'une quelconque des revendications précédentes, **caractérisée en ce que** l'additif apte à l'électroluminescence est encapsulé.

6. Masse autoadhésive selon l'une quelconque des revendications précédentes, **caractérisée en ce que** l'intensité minimale d'éclairage à 200 V/700 Hz est de 15 lx, de préférence de 30 lx, plus préférablement de 70 lx.

7. Masse autoadhésive selon l'une quelconque des revendications précédentes, **caractérisée en ce que** des azurants optiques sont mélangés à la masse autoadhésive, en particulier des dérivés de stilbène, d'éthylène, de coumarine, de naphtalimide et/ou de pyrazole.

8. Masse autoadhésive selon la revendication 7, **caractérisée en ce que** les azurants optiques sont mélangés à la masse autoadhésive à un degré de remplissage allant jusqu'à 5% en poids.

9. Masse autoadhésive selon l'une quelconque des revendications précédentes, **caractérisée en ce que** des pigments colorés sont mélangés à la masse autoadhésive, en particulier des pigments azo, des pigments colorés minéraux et/ou des pigments colorés de thé.

10. Masse autoadhésive selon la revendication 9, **caractérisée en ce que** les pigments colorés sont mélangés à la masse autoadhésive à un degré de remplissage allant jusqu'à 5% en poids.

11. Masse autoadhésive selon la revendication 9 ou 10, **caractérisée en ce que** de l'oxyde de zinc, du dioxyde de titane, du dioxyde de silicium et/ou du dioxyde de zirconium sont mélangés à la masse autoadhésive comme pigments colorés.

**12.** Bande adhésive présentant une masse autoadhésive, **caractérisée en ce que** la masse autoadhésive est formée selon l'une quelconque des revendications précédentes.

11

12

13

Fig. 1

21

22

23

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1003354 A1
- US 2981858 A
- US 6765078 B2
- DE 10036901 A1
- US 20040092685 A1
- EP 0824111 A1
- EP 826698 A1
- EP 824110 A1
- EP 841346 A1
- EP 850957 A1
- US 5945491 A
- US 5854364 A
- US 5789487 A

**In der Beschreibung aufgeführte Nicht-Patentliteratur**

- **von Donatas Satas.** Handbook of Pressure Sensitive Adhesive Technology. van Nostrand, 1989, 444-514
- **T.G. Fox.** *Bull. Am. Phys. Soc.,* 1956, vol. 1, 123